# EUROPEAN PATENT SPECIFICATION

(11) **EP 1 721 734 B1**
(45) Date of publication and mention of the grant of the patent: **11.06.2008**
(21) Application number: 06076053.5
(22) Date of filing: 15.05.2006
(51) Int. Cl.: B32B 13/12, E04F 15/00

(54) **Floor covering**
Bodenbelag
Revêtement de sol

(30) Priority: 13.05.2005 NL 1029047
(43) Date of publication of application: 15.11.2006
(73) Proprietor: Pelt & Hooykaas-Elcemo B.V., 3087 AA Rotterdam (NL)
(72) Inventor: Bottema, Willem Murk, 4651 WH Steenbergen (NL)
(74) Representative: Vermeulen, Martijn

(56) References cited:
- EP-A- 0 411 653
- EP-A- 0 878 589
- WO-A-96/37355
- DE-A1- 2 835 924
- DE-A1- 4 032 989
- DE-A1- 4 415 502
- NL-C2- 1 010 241
- US-A1- 2003 172 600

## Description

The invention relates to a floor covering which at least comprises a support surface, a sound-insulating layer resting thereon, on which an elastic mortar layer followed by a covering layer rest.

Such floor covering is disclosed in NL 1010241. The sound-insulating layer of this floor covering consists of panels of compressed, bonded, natural and synthetic waste fibres, or a needlefelt.

A floor covering of this type is known from German utility model 296 21 670, and more particularly comprises a concrete floor as the support surface, on which there are synthetic foam panels or strips to provide sound insulation. However, a vapour-impermeable layer, in the form of a film, in particular a polyethylene film, is present between the concrete floor and the sound-insulating panels. This known floor covering is intended in particular for arranging a parquet floor on a concrete subfloor and overcomes problems caused by moisture evaporating out of the concrete, which may often take place over a very long period of time. However, it is not only a parquet floor but also a tiled floor which can suffer considerable damage as a result of evaporation of residual moisture quantities contained in the concrete of the support surface.

The inventors have now discovered a floor covering which overcomes problems of this nature.

The floor covering according to the invention is characterized in that the sound-insulating layer comprises a combination of panels of compressed, bonded, natural and synthetic waste fibres, and a needlefelt.

Surprisingly, it has been found that panels of this type are sufficiently moisture-resistant or moisture-impermeable yet can nevertheless provide considerable sound insulation.

It should be noted that panels of compressed, natural or synthetic waste fibres which can be used as sound-insulating carpets are known per se from German laid-open specification 27 13 315. To overcome problems caused by the action of moisture, said publication proposes adding means to prevent fungal growth or means for lowering the hygroscopicity to the mixture of waste fibres that is to be pressed. However, the invention does not require any such means.

It is also pointed out that a floor covering comprising a support surface on which an elastic mortar layer followed by a covering layer rest is known from German laid-open specification 28 35 924. Furthermore, a resilient layer, preferably a synthetic foam layer, or a film layer supported by a metal mesh, may be present between the support surface and the elastic mortar layer. In practice, however, the use of synthetic foam panels or a film layer presents problems since according to current standards they do not provide sufficient sound insulation.

Problems of this type do not occur with the panels used according to the invention.

It is preferable for the sound-insulating layers according to the invention to provide sound insulation of at least 10 dB. An improvement of this nature therefore satisfies the requirement of 10 dB imposed by standards NEN 1070, NEN 5079 and NEN-EN-ISO 717-2.

It is expedient for the sound-insulating layer to have a thickness of from 2 to 20 mm, preferably 3 to 18 mm, more preferably 12 to 18 mm. Such a low thickness makes it possible to obtain a complete floor covering which is particularly thin.

In one embodiment of the floor covering according to the invention, a joint-covering synthetic film layer which prevents the formation of contact bridges is present between the sound-insulating layer and the mortar layer. This prevents the mortar from entering the joints between the panels of the sound-insulating layer during application, which could enable it to form contact bridges with the support surface. Contact bridges of this type completely destroy the sound insulation.

Obviously, the film layer referred to does not have to comprise strips alone; optionally overlapping sheets can also be used, provided that at least the joints between the sound-insulating panels are covered.

It is expedient for the synthetic film to comprise a nonwoven film. This nonwoven film may be slightly rough on the side facing towards the mortar layer, in order to improve the bonding of the mortar layer; in an expedient embodiment, the nonwoven film comprises a slightly rough surface on both the underside and the top side.

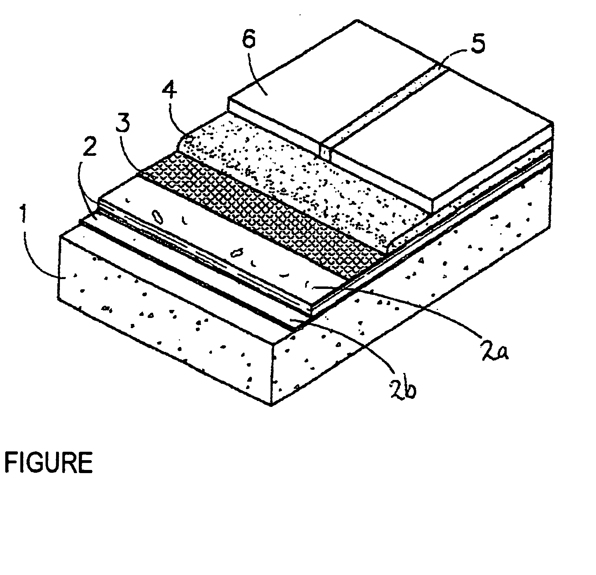

The invention will be explained in more detail below with reference to the accompanying figure, which shows a preferred embodiment of the invention.

The figure shows a bottom support surface, for example in the form of a wood or concrete floor 1. A layer 2 of sound-insulating panels 2a and sound-insulating needlefelt 2b is arranged on the floor 1. This sound-insulating layer 2 does not necessarily have to be anchored to the bottom support surface; according to the invention it comprises a combination of panels 2a of compressed, bonded natural and synthetic waste fibres and a needlefelt 2b.

The needlefelt 2b is preferably 0.1 to 3 mm thick, more preferably 1.5 to 3 mm, even more preferably 2-3 mm. The needlefelt 2b may have a material weight of 100-400 g/m² and may comprise polyester fibres. In an embodiment, the needlefelt 2b is a layer of felt.

The needlefelt expediently comprises polyester fibres which have been joined to one another by needling and have a thickness of approx. 2 mm and a weight of approx. 150 g/m². The needlefelt is if appropriate provided with a polyethylene film with a thickness of approx. 120 µm.

Panels of compressed natural and synthetic waste fibres, by contrast, in addition to a weight of approximately 5-7 kg/m², may have a compressive strength of approximately 0.114 N/mm² and a dynamic stiffness of approximately 186 MN/m³, and expediently have a thickness of approximately 10-15 mm.

In one embodiment, the sound-insulating needlefelt 2b is arranged between the support surface 1 and the layer of sound-insulating panels 2a.

Obviously, the present details are not given in such a way as to impose any form of restriction, but rather merely constitute an explanation.

There is preferably a synthetic film layer 3 on top of the sound-insulating layer 2. This synthetic film layer 3 does not have to be continuous, but rather may also comprise strips, which in this case only cover the joints which are present between the panels of the sound-insulating layer. However, if the consistency of the mortar layer which is subsequently to be applied is such that it is impossible for contact bridges to form between the support floor and the mortar layer, the synthetic film layer 3 is of course superfluous and can therefore be omitted.

Mortar layer 4 has been applied to the synthetic film layer 3, and if this layer comprises joint-covering strips, also locally to the sound-insulating panels 2. This mortar layer is formed from a mixture of sand, cement, rubber particles and latex, mixed with water, and has elastic properties.

This mortar layer supports a layer of tiles 6 which are fixed in the mortar layer and joined using grout material 5 in a manner known per se.

It should be noted that by using the above-described panels of compressed, bonded, natural and synthetic waste fibres in a floor covering according to the present invention, it is possible to obtain a contact sound-insulation improvement which is well above the requirement of 10 dB imposed by NEN 1070, 5079 and NEN-EN-ISO 717-2.

## Claims

1. Floor covering at least comprising a support surface (1), a sound-insulating layer (2) resting thereon, on which an elastic mortar layer (4) followed by a covering layer (5,6) rest, **characterized in that** the sound-insulating layer (2) comprises a combination of panels of compressed, bonded, natural and synthetic waste fibres (2a), and a needlefelt (2b).

2. Floor covering according to claim 1, **characterized in that** the sound-insulating layer has a thickness of from 2 to 20 mm, preferably 3 to 18 mm, more preferably 12 to 18 mm.

3. Floor covering according toclaim 1 or 2, **characterized in that** the needlefelt comprises polyester fibres and has a thickness of 1-5 mm and a material weight of 100-400 g/m².

4. Floor covering according to any of the claims 1-3, **characterized in that** a joint-covering synthetic film layer (3), which prevents the formation of contact bridges, is present between the sound-insulating layer (2) and the mortar layer (14).

5. Floor covering according to any of the claims 1-4, **characterized in that** the synthetic film layer comprises a nonwoven film.

## Patentansprüche

1. Fußbodenbelag, der mindestens Folgendes aufweist: eine Trägerfläche (1), eine darauf liegende Schalldämmschicht (2), auf der eine elastische Mörtelschicht (4) gefolgt von einer Deckschicht (5, 6) liegen, **dadurch gekennzeichnet, dass** die Schalldämmschicht (2) eine Kombination aus Tafeln aus verdichteten, kaschierten, natürlichen und synthetischen Faserabfällen (2a) und einem Nadelfilz (2b) aufweist.

2. Fußbodenbelag nach Anspruch 1, **dadurch gekennzeichnet, dass** die Schalldämmschicht eine Dicke von 2 bis 20 mm, bevorzugt 3 bis 18 mm, stärker bevorzugt 12 bis 18 mm hat.

3. Fußbodenbelag nach Anspruch 1 oder 2, **dadurch gekennzeichnet, dass** der Nadelfilz Polyesterfasern aufweist und eine Dicke von 1 bis 5 mm und ein Materialgewicht von 100 bis 400 g/m² hat.

4. Fußbodenbelag nach einem der Ansprüche 1 bis 3, **dadurch gekennzeichnet, dass** eine Verbindungsstellen abdeckende synthetische Folienschicht (3), welche die Bildung von Kontaktbrücken verhindert, zwischen der Schalldämmschicht (2) und der Mörtelschicht (4) anwesend ist.

5. Fußbodenbelag nach einem der Ansprüche 1 bis 4, **dadurch gekennzeichnet, dass** die synthetische Folienschicht eine Vliesstoffschicht aufweist.

## Revendications

1. Revêtement de sol comprenant au moins une surface support (1), une couche d'isolation sonore (2) reposant sur elle, sur laquelle repose une couche de mortier (4) élastique suivie par une couche de couverture (5, 6), **caractérisé en ce que** la couche d'isolation sonore (2) comprend une combinaison de panneaux en fibres de déchets (2a) naturelles et synthétiques, liées, comprimées, et d'un feutre aiguilleté (2b).

2. Revêtement de sol selon la revendication 1, **caractérisé en ce que** la couche d'isolation sonore présente une épaisseur dans la fourchette allant de 2 à 20 mm, de préférence, de 3 à 18 mm, de manière mieux préférée de 12 à 18 mm.

3. Revêtement de sol selon la revendication 1 ou 2, **caractérisé en ce que** le feutre aiguilleté est comprend de fibres de polyester et présente une épaisseur comprise dans la fourchette de 1 à 5 mm et un poids de matière compris dans la fourchette de 100 à 400 g/m².

4. Revêtement de sol selon l'une quelconque des revendications 1 à 3, **caractérisé en ce qu'**une couche de couverture de joint (3) en film synthétique, empêchant la formation de ponts de contact, est présente, entre la couche d'isolation sonore (2) et la couche de mortier (4).

5. Revêtement de sol selon l'une quelconque des revendications 1 à 4, **caractérisé en ce que** la couche de film synthétique est comprend un film non tissé.
